# EUROPEAN PATENT APPLICATION

(11) **EP 4 521 190 A1**
(43) Date of publication of application: **12.03.2025**
(21) Application number: 24720401.9
(22) Date of filing: 15.04.2024
(51) Int. Cl.: G06F 1/16, H05K 1/14

(54) **FOLDABLE DEVICE INCLUDING CONNECTION MEMBER FOR BATTERY**

(30) Priority: 19.07.2023 KR 20230093968; 25.08.2023 KR 20230112349; 20.10.2023 KR 20230141565
(71) Applicant: Samsung Electronics Co., Ltd., Suwon-si, Gyeonggi-do 16677 (KR)
(72) Inventor: Jung, Kiyoung, Suwon-si, Gyeonggi-do 16677 (KR); Kim, Hyeonhak, Suwon-si, Gyeonggi-do 16677 (KR); Kim, Sangkyu, Suwon-si, Gyeonggi-do 16677 (KR)
(74) Representative: HGF
(86) International application number: PCT/KR2024/005030
(87) International publication number: WO 2025/018519

(57) **Abstract**

An electronic device includes a first housing, a second housing, a hinge structure rotatably coupled to the first housing and the second housing, a display of the second housing, a battery of the second housing, a printed circuit board PCB of the second housing, including a first surface facing the display, a second surface opposite the first surface, and a side surface extending from an edge of the first surface to an edge of the second surface, and a FPCB connecting the battery and the PCB. The FPCB includes a first portion connected to the battery and located farther from the display than the second surface of the PCB, a second portion connected to the first surface of the PCB, and a third portion extending from the first portion below the second surface of the PCB to the second portion on the first surface of the PCB. The third portion includes a section bent around the side surface of the PCB. Various other embodiments are possible.

## Description

### [Technical Field]

The following descriptions relate to a foldable device comprising a connection member of a battery.

### [Background Art]

An electronic device, such as a smartphone, may provide one or more functions relating to communication, entertainment, productivity, and various applications. Electronic devices also look to consider compactness and portability in addition to providing these functions. In view of these considerations, electronic devices being developed may include, for example, foldable electronic devices.

Electronic devices, including foldable devices, may include a battery that provides power required for operation. The battery of the electronic device may be connected (e.g., to one or more components of the electronic device, for example, a printed circuit board) through a connection member such as a flexible printed circuit board.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device may comprise a first housing, a second housing, a hinge structure rotatably coupled to the first housing and the second housing, a display disposed in the second housing, a battery disposed within the second housing, a printed circuit board (PCB) disposed within the second housing and including a first surface facing the display, a second surface opposite the first surface, and a side surface extending from an edge of the first surface to an edge of the second surface, and a flexible printed circuit board (FPCB) connecting the battery and the PCB. The FPCB may include a first portion connected to the battery and located farther from the display than the second surface of the PCB, a second portion connected to the first surface of the PCB, and a third portion extending from the first portion below the second surface of the PCB to the second portion on the first surface of the PCB. The third portion may include a section bent around the side surface of the PCB.

According to an embodiment, an electronic device may comprise a first housing, a second housing, a hinge structure, a first display, a second display, a battery within the second housing, a printed circuit board (PCB) within the second housing, and a flexible printed circuit board (FPCB). The second housing may include a sidewall. The hinge structure may be rotatably coupled to the first housing and the second housing. The first display may be disposed in a space provided by the first housing and the second housing. The first display may include a first part aligned with the first housing, a second part aligned with the second housing, and a folding part extending from the first part to the second part to be aligned with the hinge structure. The second display may be disposed in the second housing to be opposite to the second part of the first display. The battery may be located between the second part and the second display. The PCB may be partially surrounded by the sidewall. The FPCB may connect the battery to the PCB. The FPCB may include a first portion located closer to the second part than the PCB and connected to the battery, a second portion disposed on a first surface of the PCB facing the second display, and a third portion extending from the first portion to the second portion. The third portion may include a first section that passes through a space between the PCB and a portion of the sidewall and is bent around a side surface of the PCB.

### [Description of the Drawings]

FIG. 1 is a block diagram of an electronic device in a network environment according to various embodiments.
FIG. 2A illustrates an example of an unfolded state of an electronic device according to an embodiment.
FIG. 2B illustrates an example of a folded state of an electronic device according to an embodiment.
FIG. 3A is an exploded view of a first housing of an exemplary electronic device according to an embodiment.
FIG. 3B is an exploded view of a second housing of an exemplary electronic device according to an embodiment.
FIG. 4 is a diagram illustrating an exemplary battery according to an embodiment.
FIG. 5 is a diagram illustrating an electronic device in an unfolded state according to an embodiment.
FIG. 6 is a cross-sectional view cut along line A-A' of FIG. 5.
FIG. 7 is a diagram illustrating an electronic device in an unfolded state according to an embodiment.
FIG. 8 is a cross-sectional view cut along line B-B' of FIG. 7.

### [Mode for Invention]

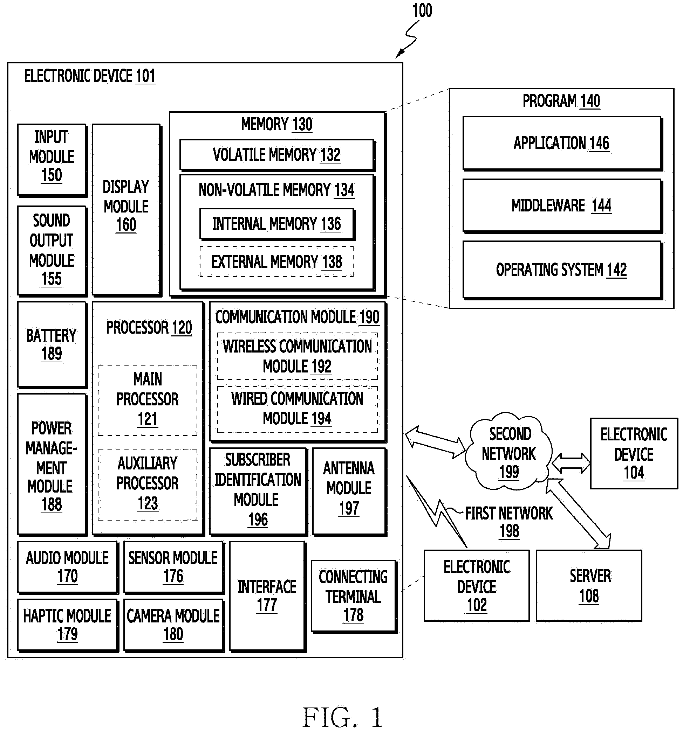

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

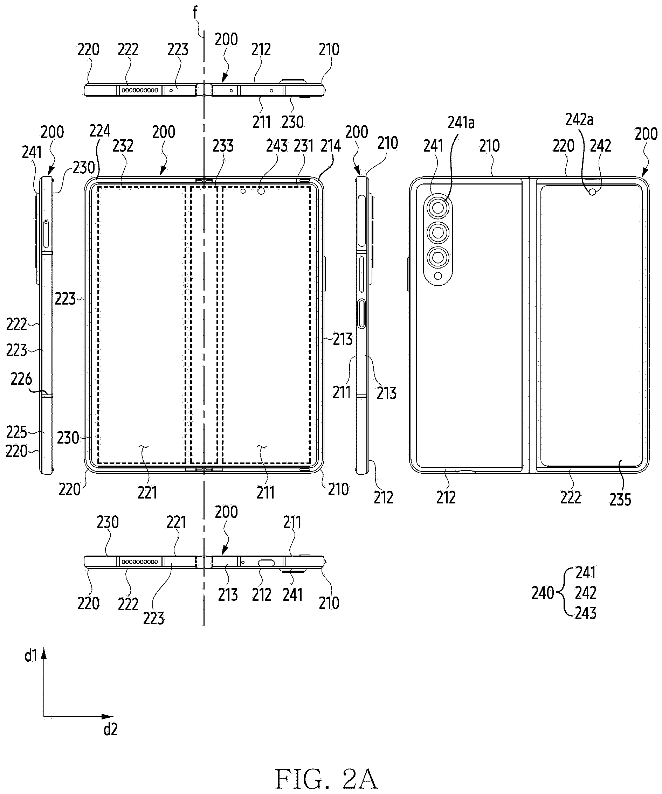

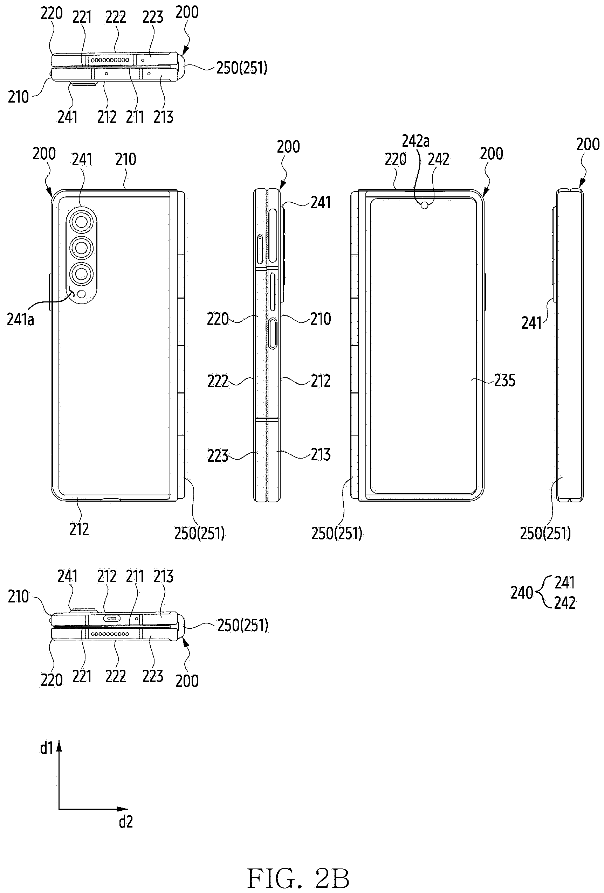

FIG. 2A illustrates an example of an unfolded state (e.g., an open state) of an electronic device according to an embodiment. FIG. 2B illustrates an example of a folded state (e.g., a bent, or closed state) of an electronic device according to an embodiment.

Referring to FIGS. 2A and 2B, an electronic device 200 (e.g., the electronic device 101 of FIG. 1) may include a first housing 210, a second housing 220, a display 230 (e.g., the display module 160 of FIG. 1), at least one camera 240 (e.g., the camera module 180 of FIG. 1), and a hinge structure 250.

In an embodiment, the first housing 210 and the second housing 220 may form at least a portion of the exterior of the electronic device 200. At least a portion of an outer surface of the electronic device 200 defined by the first housing 210 and the second housing 220 may contact a part of a user's body when the electronic device 200 is used by the user. According to an embodiment, the first housing 210 may include a first surface 211, a second surface 212 facing the first surface 211 and spaced apart from the first surface 211, and a first side surface 213 surrounding at least a portion of the first surface 211 and the second surface 212. The first side surface 213 may connect a periphery of the first surface 211 to a periphery of the second surface 212. The first surface 211, the second surface 212, and the first side surface 213 may define an inner space of the first housing 210. According to an embodiment, the first housing 210 may provide a space formed by the first surface 211, the second surface 212, and the first side surface 213, as a space for arranging components of the electronic device 200.

According to an embodiment, the second housing 220 may include a third surface 221, a fourth surface 222 facing the third surface 221 and spaced apart from the third surface 221, and a second side surface 223 surrounding at least a portion of the third surface 221 and the fourth surface 222. The second side surface 223 may connect a periphery of the third surface 221 to a periphery of the fourth surface 222. The third surface 221, the fourth surface 222, and the second side surface 223 may define an inner space of the second housing 220. According to an embodiment, the second housing 220 may provide a space formed by the third surface 221, the fourth surface 222, and the second side surface 223 surrounding at least a portion of the third surface 221 and the fourth surface 222 as a space for mounting, or arranging, components of the electronic device 101. According to an embodiment, the second housing 220 may be coupled to the first housing 210 so as to be rotatable with respect to the first housing 210.

According to an embodiment, each of the first housing 210 and the second housing 220 may include each of a first protection member 214 and a second protection member 224. The first protection member 214 and the second protection member 224 may be disposed on the first surface 211 and the third surface 221 along a periphery of the display 230. According to an embodiment, the first protection member 214 and the second protection member 224 may prevent a foreign substance (e.g., dust or moisture) from inflowing through a gap between the display 230 and the first housing 210 and the second housing 220. For example, the first protection member 214 may surround a periphery of a first display area 231 of the display 230, and the second protection member 224 may surround a periphery of a second display area 232 of the display 230. The first protection member 214 may be formed by being attached to the first side surface 213 of the first housing 210 or may be integrally formed with the first side surface 213. The second protection member 224 may be formed by being attached to the second side surface 223 of the second housing 220, or may be integrally formed with the second side surface 223.

According to an embodiment, the first side surface 213 and the second side surface 223 may include a conductive material, a non-conductive material, or a combination thereof. For example, the second side surface 223 may include at least one conductive member 225 and at least one non-conductive member 226. At least one conductive member 225 may include a plurality of conductive members, which are spaced apart from each other. At least one non-conductive member 226 may be disposed between the plurality of conductive members. The plurality of conductive members may be disconnected from each other by the at least one non-conductive member 226 disposed between the plurality of conductive members. According to an embodiment, the plurality of conductive members and the plurality of non-conductive members may form an antenna radiator together. The electronic device 200 may transmit and receive a radio signal for communicating with an external electronic device, through the antenna radiator formed by the plurality of conductive members and the plurality of non-conductive members.

The display 230 may be configured to display visual information. According to an embodiment, the display 230 may be disposed on the first surface 211 of the first housing 210 and the third surface 221 of the second housing 220 across the hinge structure 250. For example, the display 230 may include a first display area 231 disposed on the first surface 211 of the first housing, a second display area 232 disposed on the third surface 221 of the second housing, and a third display area 233 disposed between the first display area 231 and the second display area 232. In examples recited herein, the display 230 may be referred to as a flexible display, and may also be referred to as a foldable display (that is, the display 230 is able to be folded, or bent, for example, around a folding line). The first display area 231, the second display area 232, and the third display area 233 may be referred to as a first part (or a first flat part), a second part (or a second flat part), and a folding part.

The first display area 231, the second display area 232, and the third display area 233 may form a front surface of the display 230 (e.g., when in the unfolded state). According to an embodiment, the display 230 may further include a sub-display panel 235 (e.g., forming, or comprising, a display, or sub-display) disposed on the fourth surface 222 (e.g., an outer surface) of the second housing 220.. For example, the sub-display panel 235 may comprise an outer display (e.g., a sub-display provided, or displayed, on an outer surface of the second housing).

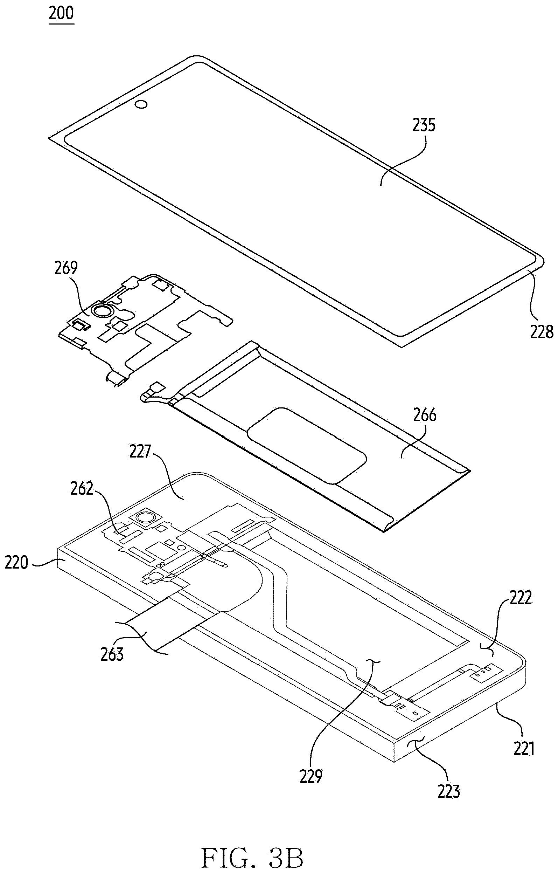

According to an embodiment, the display 230 may include a window exposed toward the outside of the electronic device 200. The window may protect the surface of the display 230, and transmit visual information provided by the display 230 to the outside of the electronic device 200 by including a substantially transparent material. For example, the windows may include glass (e.g., ultra-thin glass (UTG)) and/or polymer (e.g., polyimide (PI)), but is not limited thereto. In an embodiment, the window of the sub-display panel 235 may be surrounded by a bracket (e.g., a second front bracket 227 or a second rear bracket 228 of FIG. 3B) of the second housing 220 or may be disposed on a bracket. In an embodiment, the second rear bracket (e.g., the second rear bracket 228 of FIG. 3B) of the second housing 220 may be understood to include the window of the sub-display panel 235.

At least one camera 240 may be configured to obtain an image based on receiving light from an external subject of the electronic device 200. According to an embodiment, the at least one camera 240 may include first cameras 241, a second camera 242, and a third camera 243. The first cameras 241 may be disposed in the first housing 210. For example, the first cameras 241 may be disposed inside the first housing 210, and at least a portion thereof may be visible through the second surface 212 of the first housing 210. The first cameras 241 may be supported by a bracket (not shown) in the first housing 210. The first housing 210 may include at least one opening 241a overlapping the first cameras 241 when the second surface 212 is viewed from above. The first cameras 241 may obtain an image based on receiving light from the outside of the electronic device 200 through the at least one opening 241a.

According to an embodiment, the second camera 242 may be disposed in the second housing 220. For example, the second camera 242 may be disposed inside the second housing 220 and may be visible through the sub-display panel 235. The second housing 220 may include at least one opening 242a overlapping the second camera 242 when the fourth surface 222 is viewed from above. The second camera 242 may obtain an image based on receiving light from the outside of the electronic device 200 through the at least one opening 242a.

According to an embodiment, the third camera 243 may be disposed in the first housing 210. For example, the third camera 243 may be disposed inside the first housing 210, and at least a portion thereof may be visible through the first surface 211 of the first housing 210. For another example, the third camera 243 may be disposed inside the first housing 210, and at least a portion thereof may be visible through the first display area 231 of the display 230. The first display area 231 of the display 230 may include at least one opening (not shown) overlapping the third camera 243 when the display 230 is viewed from above. The third camera 243 may obtain an image based on receiving light from the outside of the display 230 through the at least one opening.

According to an embodiment, the second camera 242 and the third camera 243 may be disposed below the display 230 (e.g., a direction toward the inside of the first housing 210 or the inside of the second housing 220). For example, the second camera 242 and the third camera 243 may be a under display camera (UDC). When the second camera 242 and the third camera 243 are under-display cameras, an area of the display 230 corresponding to a location of each of the second camera 242 and the third camera 243 may not be an inactive area. For example, when the second camera 242 and the third camera 243 are under-display cameras, an area of the display 230 corresponding to a location of each of the second camera 242 and the third camera 243 may have a pixel density lower than another area of the display 230. An inactive area of the display 230 may mean an area of the display 230 that does not include a pixel or does not emit light to the outside of the electronic device 200. As another example, the second camera 242 and the third camera 243 may be punch hole cameras. When the second camera 242 and the third camera 243 are punch hall cameras, an area of the display 230 corresponding to a location of each of the second camera 242 and the third camera 243 may be an inactive area. For example, when the second camera 242 and the third camera 243 are punch hall cameras, an area of the display 230 corresponding to a location of each of the second camera 242 and the third camera 243 may include an opening that does not include a pixel.

According to an embodiment, the hinge structure 250 may rotatably connect the first housing 210 and the second housing 220. The hinge structure 250 may be disposed between the first housing 210 and the second housing 220 of the electronic device 101 so that the electronic device 200 may be bent, curved, or folded. For example, the hinge structure 250 may be disposed between a portion of the first side surface 213 and a portion of the second side surface 223, which face each other. The hinge structure 250 may change the electronic device 200 to an unfolded state (or unfolding state) in which directions of the first surface 211 of the first housing 210 and the third surface 221 of the second housing 220 are substantially the same or to a folded state (or folding state) in which the first surface 211 and the third surface 221 face each other. When the electronic device 200 is in the folded state, the first housing 210 and the second housing 220 may overlap in order to face each other.

According to an embodiment, when the electronic device 200 is in the folded state, a direction in which the first surface 211 faces and a direction in which the third surface 221 faces may be different from each other. For example, when the electronic device 200 is in the folded state, a direction in which the first surface 211 faces and a direction in which the third surface 221 faces may be opposite to each other. For another example, when the electronic device 200 is in the folded state, a direction in which the first surface 211 faces and a direction in which the third surface 221 faces may be inclined with respect to each other. When the direction in which the first surface 211 faces is inclined with respect to the direction in which the third surface 221 faces, the first housing 210 may be inclined with respect to the second housing 220.

According to an embodiment, the electronic device 200 may be foldable based on a folding axis f. The folding axis f may mean an imaginary line extending through the hinge cover 251 in a direction (e.g., d1 in FIGS. 2A and 2B) substantially parallel to a longitudinal direction (e.g., direction d1) of the electronic device 200, but is not limited thereto. For example, unlike the illustration, the electronic device 200 may also be folded based on an axis parallel to a width direction (e.g., direction d2). In this case, the folding axis f may be an imaginary line extending in a direction (e.g., d2 of FIGS. 2A and 2B) substantially perpendicular to the longitudinal direction of the electronic device 200. When the folding axis f extends in the direction substantially perpendicular to the longitudinal direction of the electronic device 200, the hinge structure 250 may extend in a direction parallel to the folding axis f and connect the first housing 210 and the second housing 220. The first housing 210 and the second housing 220 may be rotatable by the hinge structure 250 extending in the direction substantially perpendicular to the longitudinal direction of the electronic device 200.

According to an embodiment, the hinge structure 250 may include a hinge cover 251. The hinge cover 251 may surround internal components of the hinge structure 250 and form an outer surface of the hinge structure 250. According to an embodiment, when the electronic device 200 is in the folded state, at least a portion of the hinge cover 251 surrounding the hinge structure 250 may be exposed to the outside of the electronic device 200 through the first housing 210 and the second housing 220. According to an embodiment, when the electronic device 200 is in the unfolded state, the hinge cover 251 may be covered by the first housing 210 and the second housing 220, and may not be exposed to the outside of the electronic device 200.

Meanwhile, FIGS. 2A and 2B illustrate the electronic device 200 as a device that operates according to an in-fold (e.g., inwardly folding) method in which the display 230 is not visually exposed to the outside of the electronic device 200 within the folded state of the electronic device 200, but is not limited thereto. For example, the electronic device 200 may operate according to an out-fold (e.g., outwardly folding) method in which the display 230 is visually exposed to the outside of the electronic device 200 within the folded state of the electronic device 200. For example, in case that the electronic device 200 is an out-foldable device, the first display area 231, the second display area 232, and the third display area 233 of the display 230 may be visually exposed to the outside of the electronic device 200 within the folded state of the electronic device 200. For another example, the electronic device 200 may operate in an in-and-out method capable of being both the out-fold method and the in-fold method. For another example, the electronic device 200 may further include a third housing (not shown) rotatably connected to the first housing 210 or the second housing 220. In this case, the electronic device 200 may further include another hinge structure (e.g., hinge structure 250) rotatably connecting the third housing to the first housing 210 or the second housing 220. The other hinge structure may be configured in the in-fold method, the out-fold method, or the in-and-out method, similar to the described above.

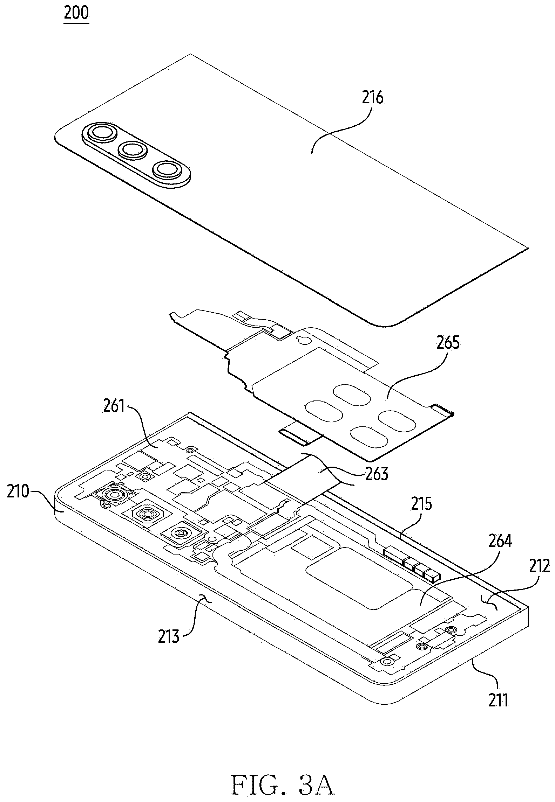

FIG. 3A is an exploded view of a first housing of an exemplary electronic device according to an embodiment. FIG. 3B is an exploded view of a second housing of an exemplary electronic device according to an embodiment.

Referring to FIGS. 3A and 3B, according to an embodiment, a first housing 210 may include a first front bracket 215 and a first rear bracket 216, and a second housing 220 may include a second front bracket 227 and a second rear bracket 228. The first front bracket 215 and the first rear bracket 216 may support components of the electronic device 200. The first front bracket 215 may define the first housing 210 by being coupled to the first rear bracket 216. The first rear bracket 216 may define a portion of an outer surface of the first housing 210. The second front bracket 227 may define the second housing 220 by being coupled to the second rear bracket 228. The second rear bracket 228 may define a portion of an outer surface of the second housing 220. The second front bracket 227 and the second rear bracket 228 may support components of the electronic device 200. For example, a display (e.g., the display 230 in FIG. 2A) may be disposed on a surface of the first front bracket 215 and a surface of the second front bracket 227. The first rear bracket 216 may be disposed on another surface of the first front bracket 215 opposite to the surface of the first front bracket 215. The second rear bracket 228 may be disposed on another surface of the second front bracket 227 opposite to the surface of the second front bracket 227. The sub-display panel 235 may be disposed between the second front bracket 227 and the second rear bracket 228.

According to an embodiment, a portion of the first front bracket 215 may be surrounded by the first side surface 213, and a portion of the second front bracket 227 may be surrounded by the second side surface 223. For example, the first front bracket 215 may be integrally formed with the first side surface 213, and the second front bracket 227 may be integrally formed with the second side surface 223. For another example, the first front bracket 215 may be formed separately from the first side surface 213, and the second front bracket 227 may be formed separately from the second side surface 223.

In an embodiment, the first rear bracket 216 may be coupled to the first front bracket 215, or may be integrally formed with the first front bracket 215. In an embodiment, the second rear bracket 228 may be coupled to the second front bracket 227, or may be integrally formed with the second front bracket 227.

According to an embodiment, the electronic device 200 may include a printed circuit board 261 (e.g., a first printed circuit board), a printed circuit board (e.g., a second printed circuit board) 262, a flexible printed circuit board 263, a cover 269, batteries 264 and 266 (e.g., the battery 189 in FIG. 1), and an antenna 265 (e.g., the antenna module 197 in FIG. 1). The printed circuit board 261 and the printed circuit board 262 may each form an electronic connection between components in the electronic device 200. For example, components (e.g., the processor 120 in FIG. 1) for implementing the overall functions of the electronic device 200 may be disposed on the printed circuit board 261, and electronic components for implementing some functions of the printed circuit board 261 may be disposed on the printed circuit board 262. For another example, components for operation of the sub-display panel 235 may be disposed on the printed circuit board 262.

According to an embodiment, the printed circuit board 261 may be disposed in the first housing 210. For example, the printed circuit board 261 (e.g., the first printed circuit board) may be disposed on a surface of the first front bracket 215. According to an embodiment, the printed circuit board 262 (e.g., the second printed circuit board) may be disposed in the second housing 220. For example, the printed circuit board 262 may be spaced apart from the printed circuit board 261 and disposed on a surface of the second front bracket 227. The flexible printed circuit board 263 may connect the printed circuit board 261 and the printed circuit board 262. For example, the flexible printed circuit board 263 may extend from the printed circuit board 261 to the printed circuit board 262.

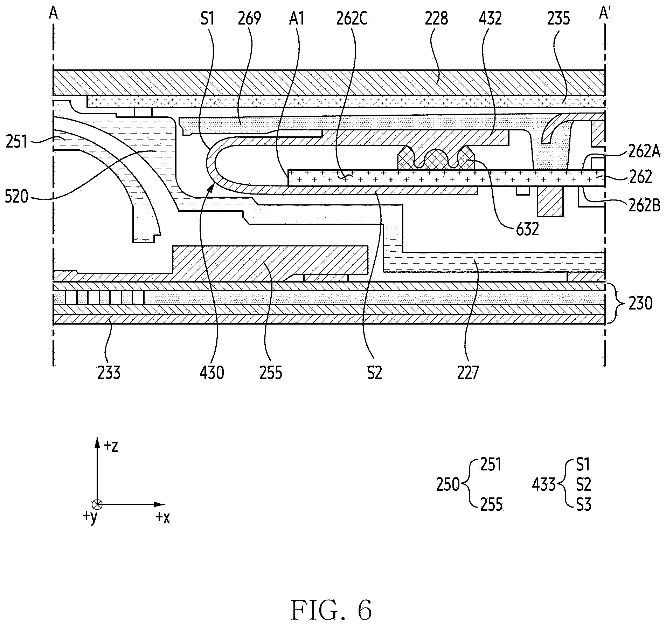

The cover 269 may be disposed on the printed circuit board 262. The cover 269 may be located between the printed circuit board 262 and the sub-display panel 235 (or the second rear bracket 228). The cover 269 may protect various components disposed on the printed circuit board 262. The cover 269 may prevent separation of connectors by covering the connectors coupled on the printed circuit board 262 (e.g., a second portion 432 of FIG. 6). The cover 269 may partially support the sub-display panel 235.

The batteries 264 and 266 are devices for supplying power to at least one component of the electronic device 200, and may include, for example, a rechargeable secondary battery or fuel cell. The battery 264 may be disposed in the first housing 210. The battery 266 may be disposed in the second housing 220. For example, the battery 266 may be at least partially accommodated in a recess 229 formed in the surface of the second front bracket 227. For stability according to use, the recess 229 may have a larger volume than the battery 266. At least a portion of the battery 264 and/or the battery 266 may be disposed on substantially the same plane as the printed circuit board 261 and/or the printed circuit board 262.

The antenna 265 may be configured to receive power or a signal from the outside of the electronic device 200. According to an embodiment, the antenna 265 may be disposed between the first rear bracket 216 and the battery 264. For example, the antenna 265 may include a near field communication (NFC) antenna, an antenna module, and/or a magnetic secure transmission (MST) antenna. For example, the antenna 265 may perform short-range communication with an external device or wirelessly transmit and receive power required for charging.

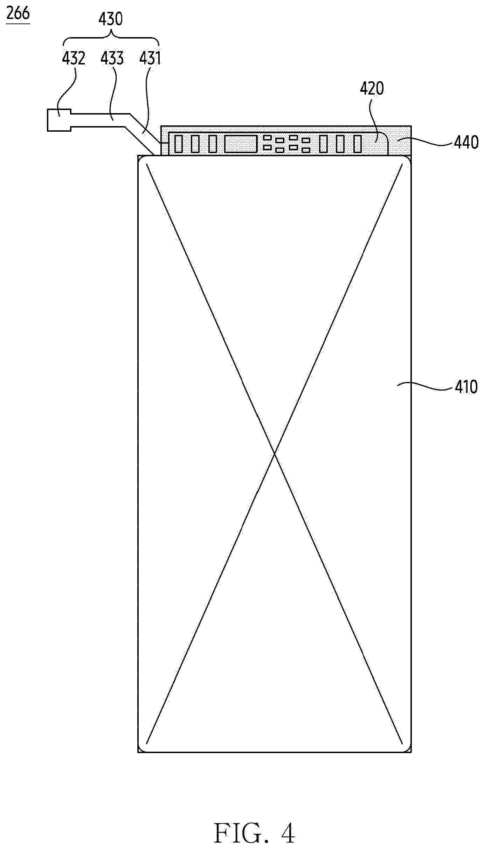

FIG. 4 is a diagram illustrating an exemplary battery according to an embodiment. Referring to FIG. 4, according to an embodiment, the battery 266 may include a cell 410, a substrate 420 on which a circuit electrically connected to the cell 410 is formed, a connection member 430 bonded to the substrate 420 for connecting a circuit on the substrate 420 to another configuration (e.g., the printed circuit board 262 of FIG. 3B), and a protection member 440 (e.g., a non-conductive film) surrounding the substrate 420 to protect the circuit of the substrate 420. The circuit formed on the substrate 420 may include a battery protection circuit. The substrate 420 on which the circuit is formed may be referred to as a protection circuit module (PCM). The substrate 420 may include a rigid printed circuit board, but is not limited thereto.

In an embodiment, the connection member 430 may include a first portion 431, a second portion 432, and a third portion 433. The first portion 431 may be connected to the battery 266. For example, the first portion 431 may be connected to the battery 266 through the substrate 420. The first portion 431 may extend from the substrate 420. The second portion 432 may be spaced apart from the first portion 431. The third portion 433 may connect the first portion 431 to the second portion 432. The third portion 433 may extend from the first portion 431 to the second portion 432.

In any of the detailed examples described herein (e.g., with reference to any of Figs 1 to 8), the connection member 430 may include a flexible printed circuit board capable of being at least partially bent. That is, at least a portion, or section, of the connection member 430 (e.g., flexible printed circuit board) may be (at least partially) bent and/or flexed. In an embodiment, the substrate 420 and the connection member 430 may be integrally formed. However, examples of the present disclosure are not limited thereto.

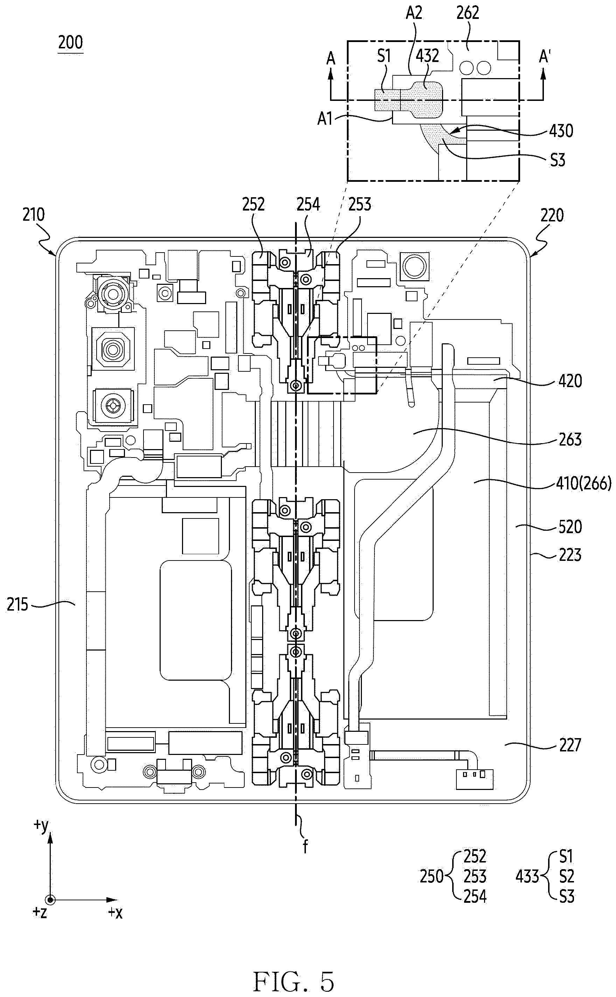

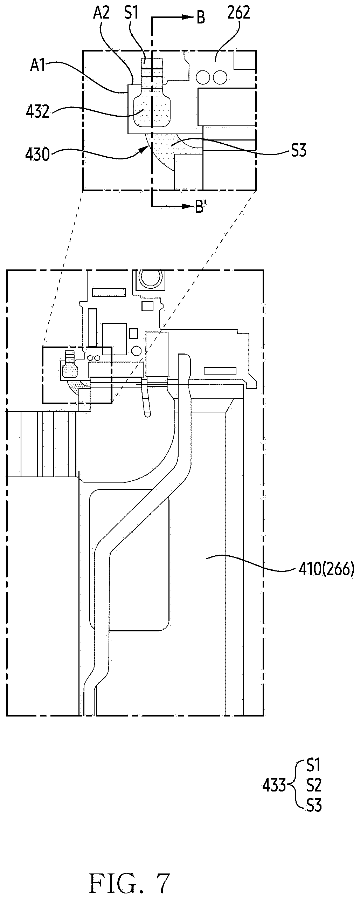

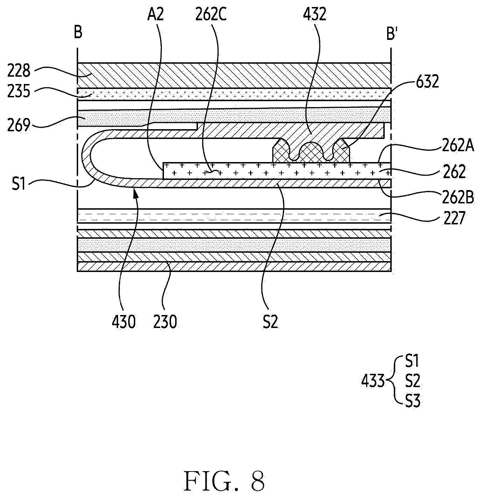

FIG. 5 is a diagram illustrating an electronic device in an unfolded state according to an embodiment. FIG. 6 is a cross-sectional view cut along line A-A' of FIG. 5. FIG. 7 is a diagram illustrating an electronic device in an unfolded state according to an embodiment. FIG. 8 is a cross-sectional view cut along line B-B' of FIG. 7. In the examples below detailed, reference may be made herein to the electronic device as described in the above-detailed Figures (e.g., FIG. 1, FIG. 2A, FIG. 2B, FIG. 3A, FIG. 3B, FIG. 4), wherein features described by the same reference numerals similarly correspond.

Referring to FIG. 5, in an embodiment, the hinge structure 250 may include a first hinge plate 252, a second hinge plate 253, and a hinge module 254. The first hinge plate 252 and the second hinge plate 253 may be coupled to the first housing 210 and the second housing 220, respectively, to rotatably connect the first housing 210 and the second housing 220. For example, the first hinge plate 252 may be coupled to the first front bracket 215 of the first housing 210, and the second hinge plate 253 may be coupled to the second front bracket 227 of the second housing 220. As the first hinge plate 252 and the second hinge plate 253 are coupled to the first front bracket 215 and the second front bracket 227, respectively, the first housing 210 and the second housing 220 may be rotatable according to the rotation of the first hinge plate 252 and the second hinge plate 253.

In an embodiment, the hinge module 254 may rotate the first hinge plate 252 and the second hinge plate 253. The hinge module 254 may include a bracket, and a first hinge arm and a second hinge arm rotatably disposed on the bracket. Rotations of the first hinge arm and the second hinge arm may be interworked through gears engaged with each other. The first hinge arm may be connected to the first hinge plate 252 and the second hinge arm may be connected to the second hinge plate 253. The hinge module 254 may include a cam structure and/or a spring configured to provide rotational resistance to the first hinge arm and the second hinge arm, in order to maintain a folded angle of the first housing 210 and the second housing 220. However, mechanism of the hinge structure 250 for rotating the first housing 210 and the second housing 220 is not limited by the above-described example, and various designs and variations may be possible.

According to an embodiment, the hinge structure 250 may include a plurality of hinge assemblies. Each of the plurality of hinge assemblies may include the hinge module 254, the first hinge plate 252, and the second hinge plate 253. As shown, one hinge assembly may be disposed above the flexible printed circuit board 263, and two hinge assemblies may be disposed below the flexible printed circuit board 263, but is not limited thereto.

In the unfolded state, an imaginary line parallel to the folding axis f may pass through the connection member 430 and the second hinge plate 253. In the unfolded state, when the second housing 220 is viewed from above (e.g., when viewed in the z-axis direction), the connection member 430 may not overlap the second hinge plate 253 and the hinge module 254. Herein, "overlap" only means that at least a portion of a component is located within (or at least partially within) a boundary of another component when projected as a specific point of view (e.g., viewing angle), and it is not interpreted that they are physically contacted or separated unless otherwise stated.

Referring to FIG. 6 together with FIG. 5, in an embodiment, the second front bracket 227 may include a sidewall 520 extending in a thickness direction (e.g., z-axis direction) of the second housing 220. A portion of the sidewall 520 may form the second side surface 223 of the second housing 220. A remaining portion of the sidewall 520 may face the hinge structure 250.

In an embodiment, the hinge structure 250 may further include a first wing plate 255 and a second wing plate (not shown). The second wing plate may be formed symmetrically with respect to the first wing plate 255 based on the folding axis f. The first wing plate 255 may be rotated by the hinge module 254. The first wing plate 255 may be interworked with a rotation of the second hinge plate 253. However, rotation paths and/or rotation axes of the first wing plate 255 and the second hinge plate 253 may be different from each other. The first wing plate 255 may support the folding part 233 of the display 230 in the unfolded state. When changing from the unfolded state to the folded state, the first wing plate 255 may deform, by being rotated by the hinge module 254, the folding part 233 to correspond to an angle in which the first housing 210 and the second housing 220 are folded. When alternatively or selectively changing from the unfolded state to the folded state, the first wing plate 255 may rotate so as not to be in contact with the folding part 233 so that the display 230 is not damaged. In an embodiment, in the unfolded state, the connection member 430 may be located (e.g., positioned, or arranged) between the first wing plate 255 and the sub-display panel 235. For example, in the unfolded state, the connection member may be arranged between the first wing plate 255 and the sub-display panel 235 in respect of the z axis (or thickness) direction.

In an embodiment, the printed circuit board 262 may include a first surface 262A facing the sub-display panel 235, a second surface 262B opposite to the first surface 262A, and a side surface 262C extending from a periphery of the first surface 262A to a periphery of the second surface 262B. In an embodiment, the printed circuit board 262 may be partially surrounded by the sidewall 520. For example, at least a portion of the printed circuit board 262 may be surrounded by the sidewall 520. For example, the side surface 262C of the printed circuit board 262 may be partially surrounded by the sidewall 520.

In an embodiment, the side surface 262C of the printed circuit board 262 may include a first area A1 facing (e.g., facing towards) the hinge structure 250 and a second area A2 extending from the first area A1 and facing in a different direction from the first area A1. In an embodiment, the printed circuit board 262 may be located (e.g., positioned, or arranged) in a first direction (e.g., +y direction) of the battery 266, and the second area A2 may face the first direction.

In an embodiment, a first portion (e.g., the first portion 431 of connection member 430 as described in FIG. 4) of the connection member 430 (e.g., a flexible printed circuit board) may be located further from the sub-display panel 235 than the second surface 262B of the printed circuit board 262.For example, the first portion 431 may be located below the second surface 262B of the printed circuit board 262 (e.g., in the -z direction). That is, in an example, the first portion 431 of the connection member 430 may be arranged below the printed circuit board 262 (herein, by below, in the -z , or thickness direction), such that the printed circuit board 262 is closer to the sub-display panel 235. In other words, the printed circuit board 262 may be located, or arranged between, the sub-display panel 235 and the first portion 431 of connection member 430. The first portion 431 may be located, or arranged, closer to the display 230 (e.g., at least a portion of display 230) than the second surface 262B of the printed circuit board 262. The first portion 431 may (e.g., may be arranged, or positioned so as to) not overlap the printed circuit board 262. For example, the first portion 431 may be arranged or positioned so as to not to appear to overlap the printed circuit board 262 when viewed from above (in a -z direction).

In an embodiment, the second portion 432 of the connection member 430 may be connected (e.g., configured to connect to) to the first surface 262A of the printed circuit board 262. For example, the electronic device 200 may include a connector 632 (e.g., receptacle) disposed on the first surface 262A of the printed circuit board 262. The second portion 432 of the connection member 430 may include a mating connector (e.g., a plug) coupled to the connector 632. In an embodiment, the cover 269 may be disposed on the first surface 262A of the printed circuit board 262 to cover the second portion 432 of the connection member 430. The cover 269 may prevent the second portion 432 from being separated (e.g., detached from) from the connector 632.

In an embodiment, the third portion 433 of the connection member 430 may include (e.g., comprise) a first section S1, a second section S2, and a third section S3. In an embodiment, the first section S1 may extend from the second section S2 to the second portion 432. The second section S2 may extend below the printed circuit board 262 (e.g., in the -z direction). The second section S2 may extend from the third section S3 to the first section S1. When the second housing 220 is viewed from above (e.g., when viewed in the z-axis direction), the third section S3 may not overlap the printed circuit board 262.

In an embodiment, the first section S1 may be bent around the side surface 262C of the printed circuit board 262. For example, the first section S1 may pass through a space between the side surface 262C of the printed circuit board 262 and the sidewall 520 of the second housing 220. The first section S1 may be bent to be convex toward the sidewall 520.

In an embodiment, the battery 266 may be movably disposed within a recess (e.g., the recess 229 of FIG. 3B) of the second front bracket 227 for stability. When the connection member 430 does not absorb movement of the battery 266, the connection member 430 may be separated from the battery 266 and/or the printed circuit board 262. In an embodiment, the connection member 430 may not extend directly from the battery 266 to the connector 632, but may extend from the bottom of the second surface 262B of the printed circuit board 262 around the side surface 262C to the first surface 262A, as in the third portion 433. Accordingly, a sufficient length value (e.g., a length or distance of the connector member 430) to absorb the movement of the battery 266 may be secured. For example, the battery 266 may be movable in the first direction (e.g., +y direction) and/or a second direction (e.g., -y direction) opposite to the first direction in the recess. In order to absorb the movement of the battery 266 in the first direction and/or the second direction, a direction in which the third portion 433 extends may include at least a component in the first direction. For example, in other words, the third portion 433 may extend, have a component, or a dimension, in at least the first direction (e.g., at least the y direction).

In a comparative example, referring to FIG. 4 together, but unlike this illustration, the third portion 433 may be bent and extended from the first portion 431 so as to pass over the substrate 420. In this case, a length value for absorbing the movement of the battery 266 may be secured, but the connection member 430 may further protrude in the thickness direction than the cell 410 (that is, may further extend in the direction outward in the thickness direction, e.g., z direction, of the electronic device than the cell). The protruding connection member 430 may generate noise and/or damage the sub-display panel 235 by contacting with the sub-display panel 235. On the other hand, e.g., referring back to the present disclosure, as the connection member 430 according to an embodiment extends from the bottom of the second surface 262B of the printed circuit board 262 to the first surface 262A around the side surface 262C, these problems may not occur.

In a comparative example, referring to FIGS. 5 and 6, but unlike these illustrations, the second section S2 may not extend below the printed circuit board 262, but may extend directly from the third section S3 to the first surface 262A of the printed circuit board 262. In this case, the first section S1 extending from the second section S2 may be bent between the printed circuit board 262 and the cover 269. At this time, the cover 269 may be lifted according to the repulsive force of the bent first section S1. Since the first section S1 should be bent with a large curvature in a narrow space between the printed circuit board 262 and the cover 269, the repulsive force applied to the cover 269 may become larger. As the cover 269 is lifted, the connector coupled to the first surface 262A of the printed circuit board 262 may be easily removed. On the other hand, e.g., referring back to the present disclosure, since the connection member 430 according to an embodiment is not bent between the cover 269 and the printed circuit board 262 and is bent around the side surface 262C of the printed circuit board 262, these problems may not occur.

Also, in a comparative example, when the first section S1 is bent between the printed circuit board 262 and the cover 269, the first section S1 may be difficult to bend at a correct location. This may be because a structure to guide bending of the first section S1 does not exist. On the other hand, e.g., referring back to the present disclosure, since the connection member 430 according to an embodiment is bent around the side surface 262C of the printed circuit board 262, the printed circuit board 262 itself may guide the bending of the connection member 430. Accordingly, quality deviation according to the process may be reduced.

In an embodiment, (e.g., as shown in FIG. 5 and FIG. 6) the first section S1 may be bent around the first area A1 of the side surface 262C.

Referring to FIGS. 7 and 8, the first section S1 may be bent around the second area A2 of the side surface 262C. That is, the features and description of FIG. 7 and FIG. 8 may herein correspond to that of FIG. 5 and FIG. 6 as above, and reference for brevity is made to these corresponding features recited therein.

However, differently in the examples of FIG. 7 and FIG. 8, the first section s1 is bent around second area A2, wherein second area A2 may be an area of side surface 262C facing a first (e.g., +y) direction. That is, differently in the examples of FIGs. 5-6 compared to FIGs. 7-8, the first section S1 may be bent around a different area (e.g., an area facing a different direction) of the side surface 262C of printed circuit board 262.

In a further example, although not shown, the first section S1 may be bent around another area of the side surface 262C rather than the first area A1 and the second area A2.

According to an embodiment, an electronic device (e.g., the electronic device 200 of FIG. 2A) may comprise a first housing (e.g., the first housing 210 of FIG. 2A), a second housing (e.g., the second housing 220 of FIG. 2A), a hinge structure (e.g., the hinge structure 250 of FIG. 2A) rotatably coupled to the first housing and the second housing, a display (e.g., the sub-display panel 235 of FIG. 2A) disposed in the second housing, a battery (e.g., the battery 266 of FIG. 3) disposed within the second housing, a printed circuit board (PCB) (e.g., the printed circuit board 262 of FIG. 6) disposed within the second housing and including a first surface (e.g., the first surface 262A of FIG. 6) facing the display, a second surface (e.g., the second surface 262B of FIG. 6) opposite the first surface, and a side surface (e.g., the side surface 262C of FIG. 6) extending from an edge of the first surface to an edge of the second surface, and a flexible printed circuit board (FPCB) (e.g., the connection member 430 of FIG. 6) connecting the battery and the PCB. The FPCB may include a first portion (e.g., the first portion 431 of FIG. 4) connected to the battery and located farther from the display than the second surface of the PCB, a second portion (e.g., the second portion 432 of FIG. 4) connected to the first surface of the PCB, and a third portion (e.g., the third portion 433 of FIG. 4) extending from the first portion below the second surface of the PCB to the second portion on the first surface of the PCB. The third portion may include a section (e.g., the first section S1 of FIG. 6) bent around the side surface of the PCB. Accordingly, it is possible to prevent the display from being damaged due to the FPCB. In addition, since the PCB provides a guide of the bending of the FPCB, quality deviation according to the process deviation may be reduced.

According to an embodiment, the side surface of the PCB may include a first area (e.g., the first area A1 of FIG. 6) facing the hinge structure. The section of the third portion may be bent around the first area.

According to an embodiment, the side surface of the PCB may include a first area (e.g., the first area A1 of FIG. 7) facing the hinge structure and a second area (e.g., the second area A2 of FIG. 7) extending from the first area and facing a different direction from the first area. The section of the third portion may be bent around the second area.

According to an embodiment, the PCB may be in a first direction of the battery. The second area of the side surface may face the first direction.

According to an embodiment, the third portion of the FPCB may include a section (e.g., the second section S2 of FIG. 6) extending below the PCB.

According to an embodiment, the section bent around the side surface of the PCB may be a first section and the section extending below the PCB may be a second section. The first section may extend from the second section to the second portion.

According to an embodiment, the third portion of the FPCB may include a third section (e.g., the third section S3 of FIG. 5) extending from the first portion to the second section. The third section may not overlap the PCB.

According to an embodiment, the battery may be movably disposed in the second housing in a first direction or in a second direction opposite to the first direction. The PCB may be in the first direction from the battery. A direction in which the third section extends may include a component of the first direction.

According to an embodiment, the electronic device may comprise a cover (e.g., the cover 269 of FIG. 6) disposed on the first surface of the PCB to cover the second portion of the FPCB. Accordingly, the cover may be prevented from being lifted according to the repulsive force of the FPCB, and the second portion may be prevented from being separated from the first surface of the PCB by being lifted the cover.

According to an embodiment, the cover may support the display.

According to an embodiment, the electronic device may comprise a flexible display (e.g., the display 230 of FIG. 2A) extending from the first housing to the second housing across the hinge structure. The flexible display may include a first part (e.g., the first part 231 of FIG. 2A) disposed on the first housing, a second part (e.g., the second part 232 of FIG. 2A) disposed on the second housing, and a folding part (e.g., the folding part 233 of FIG. 2A) between the first part and the second part. The second part may form a front surface (e.g., the third surface 221 of FIG. 2A) of the second housing and the display may form a rear surface (e.g., the fourth surface 222 of FIG. 2A) opposite to the front surface of the second housing.

According to an embodiment, the hinge structure may include a hinge plate (e.g., the second hinge plate 253 of FIG. 5) connected to the second housing and configured to rotate the second housing, and a wing plate (e.g., the first wing plate 255 of FIG. 6) in conjunction with the rotation of the hinge plate. The hinge structure may be variable between an unfolded state and a folded state, and the unfolded state may be a state in which the first part and the second part of the flexible display face substantially the same direction, and the folded state may be a state in which the first part and the second part face in different directions. In the unfolded state, the wing plate may support the folding part of the flexible display, and the FPCB may be located between the wing plate and the display.

According to an embodiment, the first housing may rotate around a folding axis (e.g., the folding axis f of FIG. 2A) with respect to the second housing. When viewed from above the flexible display in the unfolded state, the FPCB may not overlap the hinge plate, and an imaginary line parallel to the folding axis may pass through the hinge plate and the FPCB.

According to an embodiment, the electronic device may comprise a connector (e.g., the connector 632 of FIG. 6) disposed on the first surface of the PCB. The second portion of the FPCB may include a mating connector coupled to the connector.

According to an embodiment, the battery may include a cell (e.g., the cell 410 of FIG. 4), a protection circuit electrically connected to the cell, and a substrate (e.g., the substrate 420 of FIG. 4) on which the protection circuit is disposed. The first portion of the FPCB may be connected to the substrate.

According to an embodiment, the electronic device (e.g., the electronic device 200 of FIG. 2A) may include a first housing (e.g., the first housing 210 of FIG. 2A), a second housing (e.g., the second housing 220 of FIG. 2A), a hinge structure (e.g., the hinge structure 250 of FIG. 2A), a first display (e.g., the display 230 of FIG. 2A), a second display (e.g., the sub-display panel 235 of FIG. 2A), a battery (e.g., the battery 266 of FIG. 3B) in the second housing, a PCB (e.g., the printed circuit board 262 of FIG. 3B) in the second housing, and an FPCB (e.g., the connection member 430 of FIG. 4). The second housing may include a sidewall (e.g., the sidewall 520 of FIG. 5). The hinge structure may be rotatably coupled to the first housing and the second housing. The first display may be disposed in a space provided by the first housing and the second housing. The first display may include a first part (e.g., the first part 231 of FIG. 2A) aligned with the first housing, a second part (e.g., the second part 232 of FIG. 2A) aligned with the second housing, and a folding part (e.g., the folding part 233 of FIG. 2A) extending from the first part to the second part to be aligned with the hinge structure. The second display may be disposed in the second housing to be opposite to the second part of the first display. The battery may be located between the second part and the second display. The PCB may be partially surrounded by the sidewall. The FPCB may connect the battery to the PCB. The FPCB may include a first portion (e.g., the first portion 431 of FIG. 4) located closer to the second part than the PCB and connected to the battery, a second portion (e.g., the second portion 432 of FIG. 4) disposed on a first surface (e.g., the first surface 262A of FIG. 6) of the PCB facing the second display, and a third portion (e.g., the third portion 433 of FIG. 4) extending from the first portion to the second portion. The third portion may include a first section (e.g., the first section S1 of FIG. 6) that passes through a space between the PCB and a portion of the sidewall and is bent around a side surface (e.g., the side surface 262C of FIG. 6) of the PCB.

According to an embodiment, the third portion of the FPCB may include a second section (e.g., the second section S2 of FIG. 6) extending below the PCB. The first section may extend from the second section to the second portion.

According to an embodiment, the third portion of the FPCB may include a third section (e.g., the third section S3 of FIG. 5) extending from the first portion to the second section. The third section may not overlap the PCB.

According to an embodiment, the portion of the sidewall may be located between the hinge structure and the first section.

According to an embodiment, the electronic device may comprise a cover (e.g., the cover 269 of FIG. 6) disposed between the PCB and the first display to cover the second portion of the FPCB, and a connector (e.g., the connector 632 of FIG. 6) disposed on the first surface of the PCB. The second portion of the FPCB may include a mating connector coupled to the connector.

Certain examples of the present disclosure, with reference to the detailed examples above-described by the Figures, may comprise one or more of the following:

According to a first example, an electronic device comprises: a first housing; a second housing; a hinge structure rotatably coupled to the first housing and the second housing; a display (e.g., a sub-display) disposed in the (e.g., disposed or arranged on an outer surface of the) second housing; a battery disposed within the second housing; a printed circuit board (PCB) disposed within the second housing and including a first surface facing the display, a second surface opposite the first surface, and a side surface extending from an edge of the first surface to an edge of the second surface; and a flexible printed circuit board (FPCB) (e.g., a connection member) connecting the battery and the PCB, wherein the FPCB includes: a first portion connected to the battery and located further from the display than the second surface of the PCB (e.g., below the second surface of the PCB); a second portion connected to the first surface of the PCB; and a third portion extending from the first portion below the second surface of the PCB to the second portion on the first surface of the PCB, and wherein the third portion includes a section bent around the side surface of the PCB.

In a second example, there is provided an electronic device according to the first example, wherein the side surface of the PCB includes a first area facing the hinge structure; and the section of the third portion is bent around the first area.

In a third example, there is provided an electronic device according to the first example, wherein the side surface of the PCB includes a first area facing the hinge structure and a second area extending from the first area and facing a different direction from the first area; and the section of the third portion is bent around the second area.

In fourth example, there is provided an electronic device according to the third example, wherein the PCB is in a first direction of the battery; and the second area of the side surface faces the first direction.

In a fifth example, there is provided an electronic device according to any of the first to fourth examples, wherein the third portion of the FPCB includes a section extending below the PCB.

In a sixth example, there is provided an electronic device according to the fifth example, wherein: the section bent around the side surface of the PCB is a first section; the section extending below the PCB is a second section; and the first section extends from the second section to the second portion.

In a seventh example, there is provided an electronic device according to the sixth example, wherein: the third portion of the FPCB includes a third section extending from the first portion to the second section; and the third section does not overlap the PCB.

In an eighth example, there is provided an electronic device according to the seventh example, wherein: the battery is movably disposed in the second housing in a first direction or in a second direction opposite to the first direction; the PCB is in the first direction from the battery; a direction in which the third section extends includes a component of the first direction.

In a ninth example, there is provided an electronic device of any one of the first to eighth examples, comprising a cover disposed on the first surface of the PCB to cover the second portion of the FPCB.

In a tenth example, there is provided an electronic device according to a ninth example, wherein the cover supports the display.

In an eleventh example, there is provided an electronic device according to the first to tenth examples, comprising a flexible display extending from the first housing to the second housing across the hinge structure, and wherein: the flexible display includes a first part disposed on the first housing, a second part disposed on the second housing, and a folding part between the first part and the second part; the second part forms a front surface of the second housing; and the display forms a rear surface opposite to the front surface of the second housing.

In a twelfth example, there is provided an electronic device according to the eleventh example, wherein the hinge structure includes: a hinge plate connected to the second housing and configured to rotate the second housing; and a wing plate in conjunction with the rotation of the hinge plate, and wherein: the hinge structure is variable between an unfolded state and a folded state; the unfolded state is a state in which the first part and the second part of the flexible display face substantially the same direction; the folded state is a state in which the first part and the second part face in different directions; and in the unfolded state: the wing plate supports the folding part of the flexible display; and the FPCB is located between the wing plate and the display.

In a thirteenth example, there is provided an electronic device according to the twelfth example, wherein the first housing rotates around a folding axis with respect to the second housing; when viewed from above the flexible display in the unfolded state: the FPCB does not overlap the hinge plate; and an imaginary line parallel to the folding axis passes through the hinge plate and the FPCB.

In a fourteenth example, there is provided an electronic device according to any of the first to thirteenth examples, comprising a connector disposed on the first surface of the PCB, and wherein the second portion of the FPCB includes a mating connector coupled to the connector.

In a fifteenth example, there is provided an electronic device according to any of first to fourteenth examples, wherein the battery includes: a cell; a protection circuit electrically connected to the cell; and a substrate on which the protection circuit is disposed, and wherein the first portion of the FPCB is connected to the substrate.

In a sixteenth example, there is provided an electronic device comprising: a first housing; a second housing including a sidewall; a hinge structure rotatably coupled to the first housing and the second housing; a first display disposed in a space provided by the first housing and the second housing, the first display including a first part aligned with the first housing, a second part aligned with the second housing, and a folding part extending from the first part to the second part to be aligned with the hinge structure; a second display disposed in the second housing to be opposite to the second part of the first display; a battery within the second housing, located between the second part and the second display; a printed circuit board (PCB) within the second housing, partially surrounded by the sidewall; and a flexible printed circuit board (FPCB) connecting the battery to the PCB, and wherein the FPCB includes: a first portion located closer to the second part than the PCB and connected to the battery; a second portion disposed on a first surface of the PCB facing the second display; and a third portion extending from the first portion to the second portion, and wherein the third portion includes a first section that passes through a space between the PCB and a portion of the sidewall and is bent around a side surface of the PCB.

In a seventeenth example, there is provided an electronic device according to the sixteenth example, wherein the third portion of the FPCB includes a second section extending below the PCB; and the first section extends from the second section to the second portion.

In an eighteenth example, there is provided an electronic device according to the seventeenth example, wherein the third portion of the FPCB includes a third section extending from the first portion to the second section; and the third section does not overlap the PCB.

In a nineteenth example, there is provided an electronic device according to any one of the sixteenth to eighteenth examples, wherein the portion of the sidewall is located between the hinge structure and the first section.

In a twentieth example, there is provided an electronic device according to any of the sixteenth to eighteenth examples, comprising: a cover disposed between the PCB and the first display to cover the second portion of the FPCB; and a connector disposed on the first surface of the PCB, and wherein the second portion of the FPCB includes a mating connector coupled to the connector.

The technical problems to be achieved in this document are not limited to those described above, and other technical problems not mentioned herein will be clearly understood by those having ordinary knowledge in the art to which the present disclosure belongs, from the following description.

The effects that can be obtained from the present disclosure are not limited to those described above, and any other effects not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing;
a second housing;
a hinge structure rotatably coupled to the first housing and the second housing;
a display disposed in the second housing;
a battery disposed within the second housing;
a printed circuit board, PCB, disposed within the second housing and including a first surface facing the display, a second surface opposite the first surface, and a side surface extending from an edge of the first surface to an edge of the second surface; and
a connection member arranged to connect the battery and the PCB, wherein connection member comprises:
a first portion, located below the second surface of the PCB, and connected to the battery;
a second portion connected to the first surface of the PCB; and
a third portion extending from the first portion to the second portion, and
wherein the third portion includes a section bent around the side surface of the PCB.

2. The electronic device of claim 1, wherein:
the side surface of the PCB includes a first area facing the hinge structure; and
the section of the third portion is bent around the first area.

3. The electronic device of claim 1, wherein:
the side surface of the PCB includes a first area facing the hinge structure and a second area extending from the first area and facing a different direction from the first area; and
the section of the third portion is bent around the second area.

4. The electronic device of claim 3, wherein:
the PCB is arranged in a first direction of the battery; and
the second area of the side surface faces the first direction.

5. The electronic device of any one of claims 1 to 4,
wherein the third portion of the connection member includes a section extending below the PCB.

6. The electronic device of claim 5, wherein:
the section bent around the side surface of the PCB is a first section;
the section extending below the PCB is a second section; and
the first section extends from the second section to the second portion.

7. The electronic device of claim 6, wherein:
the third portion of the connection member includes a third section extending from the first portion to the second section; and
whereby the third section does not overlap the PCB.

8. The electronic device of claim 7, wherein:
the battery is movably disposed in the second housing in a first direction or in a second direction opposite to the first direction;
the PCB is arranged in the first direction from the battery; and
a direction in which the third section extends includes a component of the first direction.

9. The electronic device of any one of claims 1 to 8, comprising a cover disposed on the first surface of the PCB to cover the second portion of the connection member and, wherein the cover is arranged to support the display.

10. The electronic device of any one of claims 1 to 9, comprising a flexible display extending from the first housing to the second housing across the hinge structure, and wherein:
the flexible display includes a first part disposed on the first housing, a second part disposed on the second housing, and a folding part between the first part and the second part;
the second part forms a front surface of the second housing; and
the display forms a rear surface opposite to the front surface of the second housing.

11. The electronic device of claim 10, wherein the hinge structure includes:
a hinge plate connected to the second housing and configured to rotate the second housing; and
a wing plate in conjunction with the rotation of the hinge plate, and wherein:
the hinge structure is variable between an unfolded state and a folded state;
the unfolded state is a state in which the first part and the second part of the flexible display face substantially the same direction;
the folded state is a state in which the first part and the second part face in different directions; and
in the unfolded state:
the wing plate supports the folding part of the flexible display; and
the connection member is located between the wing plate and the display.

12. The electronic device of claim 11,
wherein the first housing rotates around a folding axis with respect to the second housing;
wherein when viewed from above the flexible display in the unfolded state:
the connection member does not overlap the hinge plate; and
an imaginary line parallel to the folding axis passes through the hinge plate and the connection member.

13. The electronic device of any one of claims 1 to 12, comprising a connector disposed on the first surface of the PCB, and
wherein the second portion of the connection member includes a mating connector coupled to the connector.

14. The electronic device according to any one of claims 1 to 13, wherein the battery includes:
a cell;
a protection circuit electrically connected to the cell; and
a substrate on which the protection circuit is disposed, and
wherein the first portion of the connection member is connected to the substrate.

15. The electronic device of any of claims 1 to 14, wherein the connection member is a flexible printed circuit board, FPCB.
